**Europäisches Patentamt**

**European Patent Office**

**Office européen des brevets**

(19)

(11) Publication number: **0 044 633**
**A2**

# (12) EUROPEAN PATENT APPLICATION

(21) Application number: **81302948.5**

(22) Date of filing: **29.06.81**

(51) Int. Cl.³: **G 03 B 21/14**

(30) Priority: **18.07.80 US 170001**

(43) Date of publication of application:
**27.01.82 Bulletin 82/4**

(84) Designated Contracting States:
**DE FR GB IT SE**

(71) Applicant: **MINNESOTA MINING AND
MANUFACTURING COMPANY
3M Center, P.O. Box 33427
St. Paul, MN 55133(US)**

(72) Inventor: **Sandberg, Thomas A.
2501 Hudson Road P.O. Box 33427
St. Paul Minnesota 55133(US)**

(74) Representative: **Baillie, Iain Cameron et al,
c/o Ladas & Parry Isartorplatz 5
D-8000 München 2(DE)**

(54) Overhead projector transparency mounting frame including adhesive means for the attachment of a transparency.

(57) An overhead transparency mounting frame having a recessed transparency mounting surface marginal to and surrounding the central opening, which surface is coated with an adhesive having a sufficiently low tack to facilitate the removal and replacement of a transparency.

FIG.1

EP 0 044 633 A2

OVERHEAD PROJECTOR TRANSPARENCY MOUNTING FRAME INCLUDING
ADHESIVE MEANS FOR THE ATTACHMENT OF A TRANSPARENCY

Technical Field

This invention relates to an overhead projector transparency mounting frame for supporting a transparency thereon.

Background Art

Overhead projector transparencies are commonly used to visually accentuate presentations of information. The transparencies generally comprise a rectangular sheet of film containing a written text or other graphic representation, an image of which is to be projected upon a large viewing screen. To facilitate the handling of this transparency, a rectangular, semi-rigid, sheet-like backing or frame containing a large central opening is used to support the transparency. The transparency is positioned over this opening, and attached to the transparency frame by means such as lengths of pressure-sensitive adhesive tape affixed over the edges of the transparency and to the transparency frame. This means of attachment is cumbersome, aesthetically unattractive, and does not lend itself to the removal of the transparency from the transparency mounting frame without the degradation of either or both components.

Disclosure of the Invention

The present invention is directed to an overhead projector transparency mounting frame which affords a facile and aesthetically pleasing means for attaching a transparency thereto, and which allows the removal of the transparency from the transparency mounting frame without the degradation of the components, thereby permitting their reuse.

The overhead projector transparency mounting frame utilizes a rectangular sheet-like body member with a large central opening affording the passage of incident light therethrough. This body member has a first side including a planar transparency mounting surface which is marginal to the opening, and a planar outer border surface surrounding the mounting surface. The mounting surface is recessed from the border surface to define an indentation adapted to receive the overhead projector transparency. The overhead projector transparency is fastened onto this mounting surface by utilizing a sufficiently low-tack pressure-sensitive adhesive coated onto the mounting surface to attach the transparency and yet afford the removal and replacement of the transparency.

Description of the Drawing

The present invention will be further described hereinafter with reference to the accompanying drawing wherein

Figure 1 is a plan view of the overhead projector transparency mounting frame according to the present invention; and

Figure 2 is a partial transverse sectional view taken along lines 2-2 of Figure 1.

Detailed Description

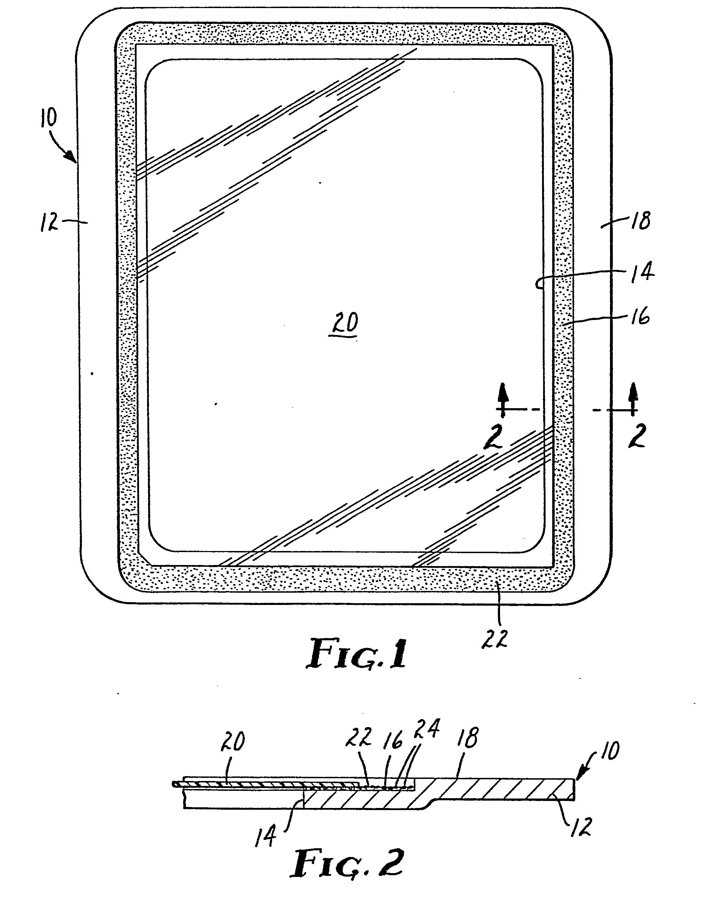

An overhead projector transparency mounting frame 10 according to the present invention is illustrated in Figures 1 and 2 wherein is shown a generally rectangular and sheet-like body member 12 having a large central opening or window 14 affording the passage of incident light therethrough. A first side of the body member 12 includes a planar transparency mounting surface 16 marginal to and around the opening 14 and a planar outer border surface 18 surrounding the mounting surface 16. The mounting surface 16 is recessed from the border surface to define an indentation adapted to receive an overhead projector transparency 20. The body member 12 can be made from any material which can be formed to the shape described and yet provide a semi-rigid support for the transparency 20.

To attach the transparency 20 to the body member 12, an adhesive means comprising a sufficiently low tack pressure-sensitive adhesive to facilitate the removal and replacement of the transparency 20 is coated on the mounting surface 16. The preferred adhesive 22 is an acrylic copolymer as described and claimed in U. S. Letters Patent No. 3,691,140 issued September 12, 1972 to S. F. Silver, assigned to the assignee of this application, and incorporated herein by reference. This adhesive is described as having infusible solvent-dispersible, solvent-insoluble, inherently tacky, elastomeric copolymer microspheres consisting essentially of about 90% to 99.5% by weight of at least one alkyl-acrylate ester and about 10 to about 0.5% by weight of at least one monomer selected from the group consisting of substantially oil-insoluble, water-insoluble, ionic monomers and maleic anhydride. The microspheres are prepared by aqueous suspension polymerization utilizing emulsifier in an amount greater than the critical micelle concentration in the absence of externally added protective colloids or the like. This adhesive 22 is coated onto the mounting surface 16 by conventional coating techniques. The tacky microspheres 24 provide a pressure-sensitive adhesive which has a low degree of adhesion permitting separation, repositioning and rebonding of whatever objects are adhered.

It is thus possible to attach a transparency 20 to the overhead projector transparency mounting frame 10 by simply placing the desired transparency 20 on a working surface such as a desk, orienting the transparency mounting frame 10 with the adhesive 22 toward the paper, centering the transparency 20 within the transparency mounting frame 20 by viewing it through the opening 14, and finally placing the transparency mounting frame 10 upon the transparency 20 so as to contact the adhesive coating 22 and the transparency 20. To ensure a good adherence between the transparency 20 and the transparency mounting frame 10, it is best to exert a slight pressure on the back side of the marginal mounting surface by running one's finger around this surface 20.

The transparency 20 can be removed by simply exerting a pressure between the transparency 20 and the transparency mounting frame 10 as can be done by pressing on the transparency 20 from the back side while holding the transparency mounting frame 10.

Having thus described a preferred embodiment of the present invention, it will be understood that changes may be made in size, shape, or configuration of some of the parts without departing from the present invention as described in the appended claims.

CLAIMS:

1.   An overhead projector transparency mounting frame comprising a generally rectangular, sheet-like body member for supporting a transparency, said body member having a large central opening affording the passage of incident light therethrough, characterized in that a·first side of said body member includes a planar transparency mounting surface marginal to said opening and a planar outer border surface surrounding said mounting surface, said mounting surface being recessed from said border surface to define an indentation adapted to receive the overhead projector transparency; and adhesive means on said mounting surface for affording the attachment thereon of a transparency said adhesive means comprising a pressure-sensitive adhesive coating having a sufficiently low tack to facilitate the removal and replacement of the transparency.

2.   An overhead projector transparency mounting frame according to claim 1 further characterized by the feature that said pressure-sensitive adhesive includes infusible, solvent dispersible, solvent insoluble, inherently tacky, elastomeric copolymer microspheres.

**FIG.1**

**FIG.2**